# EUROPEAN PATENT SPECIFICATION

(11) **EP 0 517 644 B1**
(45) Date of publication and mention of the grant of the patent: **02.08.1995**
(21) Application number: 92500066.3
(22) Date of filing: 27.05.1992
(51) Int. Cl.: B64D 1/16

(54) **Liquid containing tank to be incorporated to helicopters**
Flüssigkeitsbehälter für Hubschrauber
Réservoir pour liquides applicable aux hélicoptères

(30) Priority: 06.06.1991 ES 9101789 U
(43) Date of publication of application: 09.12.1992
(73) Proprietor: Barrigon Lafita, Jorge, E-08304 Mataro (Barcelona) (ES)
(72) Inventor: Barrigon Lafita, Jorge, E-08304 Mataro (Barcelona) (ES)
(74) Representative: Aguilar Forment, Domènec

(56) References cited:
- EP-A- 0 320 554
- DE-A- 3 315 945
- US-A- 3 423 053
- US-A- 3 494 423

## Description

This invention refers as expresed in the title of this description, to a liquid containing tank to be attached to helicopters of the type which is generally used in fire fighting.

At present, many types of tanks or containers are already known for fire fighting, which are applicable to helicopters. Such known tanks have many disadvantages which make their use rather difficult.

In principle the presently known tanks or containers are constituted in form of a seizable water deposit which has to be permanently incorporated on the lower part of the helicopter. This implies that such tank will have to be transported by the helicopter even in flights which are not related with fire fighting, which represents a heavy dead weight which impends the manoevrability of the apparatus and its available power. On the other side, as the assembly of the tank on the apparatus is rather difficult, the homologation and supervision of such assembly are required by the pertinent flight authorities, which limits the use of said tank arrangements only to apparatus for which the tank has been previously homologated.

Another negative aspect of this type of tanks consists in that they will absorb substantial power for the driving of its manoeuvering means, which will reduce the total power which is left for the helicopter itself, because both the hydraulic system as well as the electricity generator are ancilary elements which have to be connected to the power outlet of the helicopter, reducing the available power of the engine in about 10 or 20 H.P. depending on the model of the tank. This loss of power that in principle may seem unimportant, is actually of vital importance if considered that such tanks may have operative weights comprised between 1,3 and 2,5 tons, and that during its use extreme conditions are to be expected as in the extinction of a fire, the temperature of the air is much higher than normal for which reason the sustentation of the helicopter is less favourable, and the contents of oxigen in the air is much lower, while the contents of CO₂ is higher, for which reason the combustion process in the engine is less perfect, with a reduction of its power and ultimately the enormous heat which the fire generates provokes strong turbulences in form of rising air currents, that the apparatus can only overcome relying on the maximum power available from the engine. This loss of effective power of the engine produced by the influence of the tank, may mean the difference between the apparatus being capable or not of overcoming a given obstacle, the more so in small apparatus which have a reduced load capacity.

Another known drawback in present tanks of this kind consists in that they only have the possibility of being charged with fresh water, because the tanks or containers are made of steel, this implying from the other side a substantial weight of over 250 kg. Obviously, its charge with seawater would mean a rapid deterioration of its structure by the action of rust which may only be prevented at present by means of a careful and cumbersome rinsing of the inside of the tank.

Finally, these traditional tanks have a very simple safety device permitting the opening of the charging gates in case of an emergency, even in the case that the hydraulic system has been damaged or it does not have the capacity to carry out its function. Such opening device consists in the incorporation in the opening mechanisms of a bottle carrying liquid nitrogen, which cock is electrically controlled, discharging its contents under a pressure of 200 kg/cm² on the piston which opens the charging gates by which reason the gates will instantaneously open. This safety device, which is undoubtly effective, poses three main problems, on the first place, the substantial weigth of the bottle, on the second place, the hazards from handling liquid nitrogen, which is very volatile and highly dangerous because of its very low temperature in liquid state, which makes liquid nitrogen rather unsuitable for this kind of application, in which, as previously stated, the flight conditions are rather critical, and in the third place, the difficulty in recharging this kind of bottles, because for instance in Spain there are only five places for this duty, in the whole country, a recharge being necessary after each operation of said device.

Therefore, presently known tanks although they are necessary for fire fighting, they also are elements which imply substantial risks for the pilots.

This invention provides a liquid containing tank to be attached to helicopters having the features as defined in claim 1.

This invention brings a substantial progress to this kind of devices, developping new technical solutions which increase extraordinarily the performance of the tank, without reducing the conditions of safety for the pilot or for the apparatus.

This new tank for liquids is constructed as a completely autonomous unit in relation with the helicopter, being able to be ejected from the same in case of emergency. This tank will be attached to the barycentric hook of the helicopter and to a number of plates which are located on the lower part of the helicopter, in which plates some specially designed hooks are capable to be attached, being such hooks located on the upper part of the tank. The whole unit will be fixed by means of four elastic supports which are supported on strong points of the apparatus. This arrangement allows that in case of emergency the tank may be released opening the barycentric hook by a command from the dashboard of the apparatus. The tank will fall by the action of gravity. This efficient arrangement, apart from the advantage which corresponds to its safety and versatility, has additionally the advantage of not requiring homologation by the pertinent authorities, for not being a fixed attachment, for which reason its application to an helicopter has no legal limitation.

The body of the tank is divided in three parts or compartments, the first of which receives a thermal engine which drives a compressor, which pressurizes the incorporated hydraulic system for opening the discharge gates and for driving the pump for suctioning water. The second comparment receives the charge of water and the third receives a device which controls the opening and closing of the gates.

The whole unit will be hung from the lower part of the helicopter and may be managed by the pilot by means of a portable control unit incorporated in the cockpit of the apparatus, and connected to the tank by means of an electrical line which has plug terminals.

The mechanism for the opening of the gates may be designed so that the pressure of the water will hold the same in closed position, so that the hydraulic piston will operate only as a closing latch.

Finally, it is to be observed that the tank will be built in composite materials with the application of vacuum moulding techniques, resulting in a totally rust-free unit which will can be loaded with seawater without any negative consequences. The tank could receive other types of liquids for which it has not been designed in principle, like phytosanitary liquids for crop treatment. With small modifications concerning dimensions but conserving all of the attachment characteristics, it could also be used as a small hold for containing luggage or similar.

The invention will be further ilustrated by means of a preferred embodiment which has only an explanatory character, being shown in the attached sheets of drawings.

In the drawings,

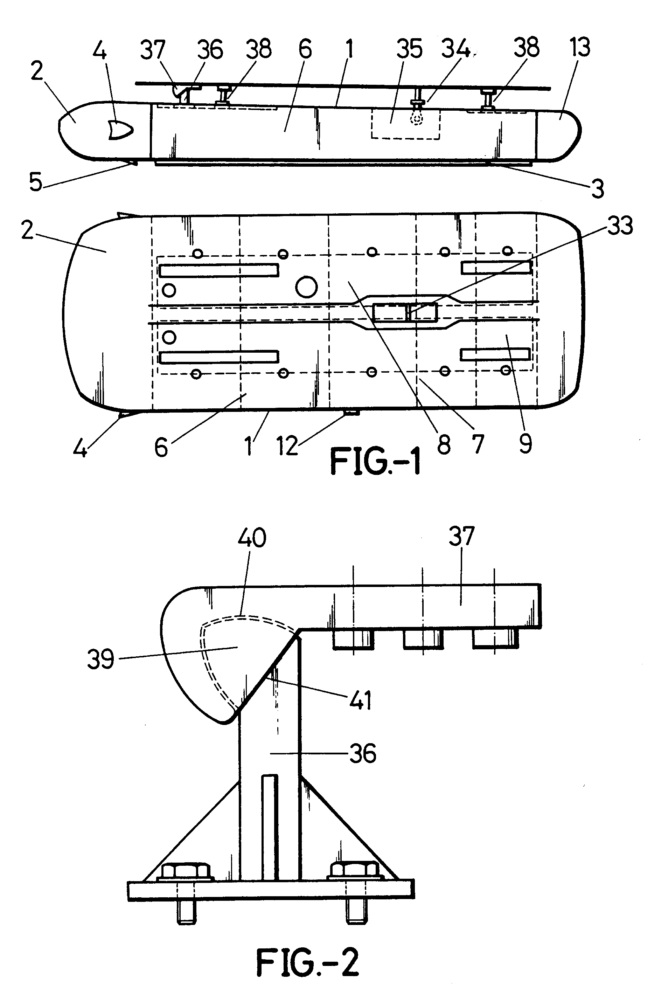

- Figure 1 corresponds to a top view and a side view of the new tank.
- Figure 2 is a detail view of the attachment hook and corresponding plate for fastening the unit.
- Figure 3 shows a pictorial view of the opening and closing mechanism for the gates.
- Figure 4 shows schematically the release mechanism for the emergency opening of the gates.

The various parts indicated with numerals in the drawings correpond to the following elements.

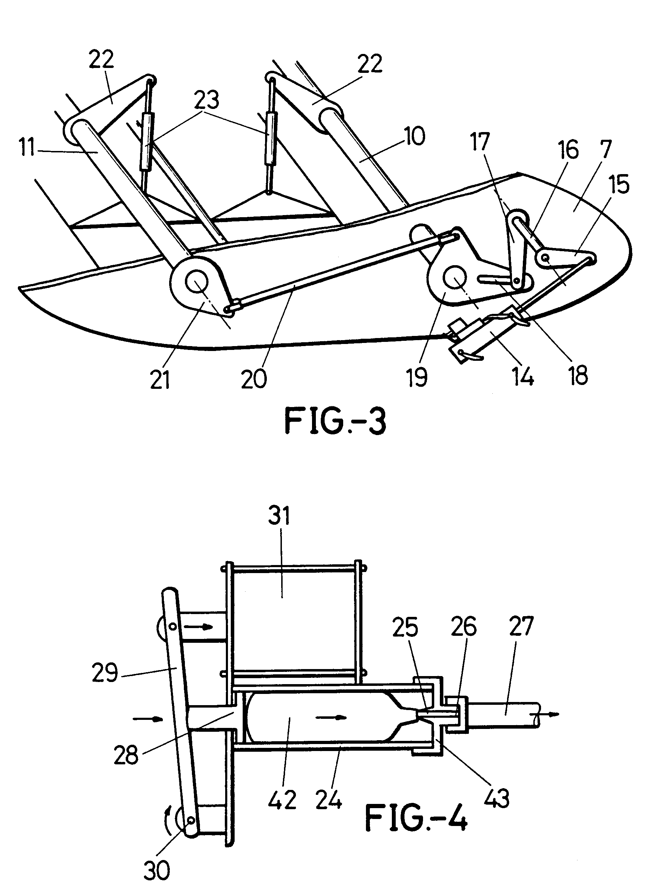

The tank for containing liquids is formed by a generally rectangular body -1- with stream lined form, which is divided in three sections: the first section -2- houses the driving mechanisms constituted by a thermal engine (not shown) which drives a compressor (nor shown) to pressurize the hydraulic fluid for the driving of the suction pumps and the gates for releasing the mass of water -3-. These elements are totally independent in respect to the engine and transmission mechanisms of the helicopter. This section is entirely built in composite material by vacuum moulding techniques and it has two dynamic openings -4- in its ends for the intake of air, as well as an outlet -5- located in its lower part which guarantees a perfect venting of the mechanisms which it contains. The second section is constituted by the water tank -6-, which comprises a number of internal walls -7- which dampen the sudden movements of water inside of the tank, which has two longitudinal gates -8- and -9- located in its lower part. Said body is crossed by two shafts -10- and -11-which form part of the mechanism for opening the gates, having as well a side mouthpiece -12- for its filling. A hose will be arranged in the mouthpiece, which hose has in its end a pump for the suction of the water. Said pump is driven by means of the hydraulic fluid. This section is entirely built in aviation aluminium. The third section -13- houses the mechanism for opening and closing the gates represented in figure 3, being also built in composite material.

The opening mechanism is made out of a jack unit -14- driven by the hydraulic fluid, which activates a horizontally located lever -15- which causes the rotation for a few degrees of a shaft which will be referred as latching shaft -16-, to which a second lever is attached, being located with a deviation of approximately 2º with the vertical direction and to be referred as backing arm -17-. The lower free end of this backing arm has an abutment part which is capable of sliding along a guide -18- placed on the longest arm of an angle plate -19- attached to the first driving shaft for the gates -10-, while the shorter arm of said angle plate support which is left on the upper part is attached to the end of a rod -20- that on the other end is attached to a third lever arm -21-corresponding to the second shaft for driving the gates, having a number of cam levers -22- located inside of the water tank which free ends are attached to the same gates by means of rods -23-, which length may be regulatable. The operation of this mechanism is the following. Starting from a position in which the gates are closed, the jack which is in an extended position will contract, causing the lever arm -15- to rotate as well as the latching shaft and the backing arm, this latter starting its rotation which causes the same to recover the angle of vertical deviation towards one of the sides, starting to increase such angle to the other side, so that the abutment part which is situated in its end will carry out a movement forcing the same to slide along the guide of the angle plate support which in its turn will rotate so that the first shaft for driving the gates and by the driving action of the rod -20- the third lever arm -21-, the second driving shaft for the gates will rotate as well, opening the gates. When the jack unit switches to its extended position, the same movements and rotations will be carried out on the contrary sense, with the result of forcing the closing of the gates. This opening mechanism has the characteristic that when the backing arm is outwardly deviated in respect to the vertical direction, its scape route will be blocked because its end is guided by the angle plate support, so that the mechanism, by the only pressure from the water on the gates will be latched and the closing pressure will be concentrated on the latching shaft, while when compensating this deviation angle with the assistance of the driving action of the jack unit, inwardly increasing such deviation, it will obtain an escape route, the latching shaft being released and the whole unit unlatched, so that the pressure of the water will be capable of opening the gates.

The mechanism for opening the gates has a safety device for emergency opening represented in figure 4, which ensures the opening of the gates in case of fault in the hydraulic system. This mechanism comprises an externally reinforced chamber -24- which houses a CO₂ bottle -42- of the type which is generally used for compressed air guns, said chamber being closed in the part which corresponds to the neck of the bottle by a threaded cap -43- which has a hollow protrusion -25-which is capable of piercing the seal of the bottle, which protrusion communicates by its other end with a fitting -26-to which a hose -27- is attached, communicating with the hydraulic circuit or with the jack unit. On the end opposed to the cap, the bottle receives the thrust of a pushing element -28- associated to a connecting lever -29- which rotates on a shaft -30- under the driving action of a magnet -31- which acts on its free end. The operation of this mechanism is the following: when the magnet is energized the conecting lever will move pushing the bottle by means of the pushing element, by which action the seal of said bottle will be pierced by the hollow protrusion, its contents being released through the protrusion and the small hose towards the jack unit.

The assembly constituted by the three sections -2-, -6- and -13- forms a unit which will be hung from the barycentric hook of the helicopter -34-, to which end it has a pin -33-located in a recess -35- of the upper face of the same. This attachment is firmly secured by two hooks -36- which protrude from the front part of the upper face of the tank engaging respective plates -37- attached to the lower part of the helicopter. This attachement is completed by four elastic supports -38- of regulatable height, which are placed under tension on strong points of the body of the helicopter. Two of the elastic supports are placed behind the hooks of the plates and the other two are located in the rear part of the tank.

The assembly formed by the hooks and the respective plates has a specific structure to prevent the lengthwise and sidewise displacements of the tank when this is placed parallel to the helicopter, the reason being that said assembly is hung from the barycentric hook, which is in recoiled position. In the situation in which the tank dips up to an inclination of 2 degrees below the horizontal, for instance after getting loose from the barycentric hook, the assembly formed by the hooks and the respective plates will be released and the whole assembly will be ejected. To this end the hook has a head -39- with a wedge structure which slightly curved upper part mates inside of a curved recess -40- located on the seat for the hook in the plate, which in its turn has two side walls -41- to assist in the perfect attachement of the hook.

The invention may comprise as well a command and control central unit which is placed within the cockpit of the helicopter and which is connected to the tank by means of wires through a connector with a groove and tongue structure, which is capable of being released by the pulling action of the wire in case of release of the tank.

It is to be observed that the above description has only an exemplary character and that the details of the embodiment of the invention may be changed without departing from the scope of the invention as defined in claim 1.

## Claims

1. Liquid containing tank to be attached to helicopters, of the type which is currently used in fire fighting, characterized by comprising a streamlined body (1) of a generally rectangular form which is divided in a first section (2) housing a thermal engine, which drives a compressor to pressurize a hydraulic circuit, and a generator, a second section (6) comprissing the liquid containing tank proper which is divided by a series of partitions (7) and which has two gates (8) and (9) for the discharge of the water contained in the tank, which gates (8,9) extend over a substantial part of the lower side of the body and a third section (13) housing a mechanism driven by the hydraulic circuit for opening and closing the gates (8,9); these three sections being made out of a composite material and constituting a compact assembly which is hung from a barycentric hook of the helicopter by means of a pin (33) located in the upper part of said body, which upper part additionally has two hooks (36) to be attached on respective plates (37) fastened to the lower part of the helicopter, said hooks (36) being placed on the front part of said streamlined body, which has additionally four elastic supports (38) of an adjustable height, two of them placed behind the hooks (36) and forwardly of the barycentric hook (34) and the other two placed rewardly of the barycentric hook (34) on the rear part of said stream lined body of the tank.

2. Liquid containing tank, according to claim 1, characterized in that the hooks which may be attached to the plates have wedge like heads (39) which upper face has a curved structure to mate inside of a correspondingly curved recess located on a seat for said head of the hook of the corresponding plate (40), having at both sides of the seat corresponding side walls (41) so that the only form to introduce or to extract the hook in respect of its seat is by an inclination of the same of 2 degrees.

3. Liquid containing tank, according to claim 1, characterized in that the mechanism for the opening of the gates is constituted by a hydraulic jack (14) which acts on a first lever arm (15) integral with a latching pin (16) which is integral as well with a backing arm (17) that when the gates are closed has a 2 degrees outwardly deviated position, having in its free end an abutment member which slides on a guide (18) located on the longest arm of an angled support (19) attached to a first driving shaft for the gates (10) which crosses all of said second section, while the shorter arm of the angled support is integral with a rod (20) which is connected by the other end to a third lever arm (21) corresponding to a second shaft (11) for driving the gates, which in its turn crosses all the second section of the tank, which shafts operate the gates by means of rods of adjustable length (23).

4. Liquid containing tank, according to the previous claim, characterized in that it further comprises a safety mechanism for emergency opening of the gates (8,9) constituted by a cylinder which contains inside a CO₂ bottle of the type used in compressed air guns, which cylinder is closed by a threaded cap (43) which has a hollow protusion (25) capable of perforating the seal of the bottle and having externally a fitting (26) to which a small hose (27) is adjusted, such hose being connected to the hydraulic circuit, while the bottom part of the bottle receives the thrust of a pusher (28) acted upon by a lever (29) driven by a magnet (31).

## Patentansprüche

1. An Hubschraubern anzubringender Flüssigkeitstank wie er derzeit zur Brandbekämpfung eingesetzt wird, gekennzeichnet dadurch, daß er einen Aufbau aus einem im allgemeinen rechteckigen, stromlinienförmigen Körper (1) enthält, der sich unterteilt in einen ersten Abschnitt (2), in dem sich ein Thermomotor, der einen Kompressor antreibt, um die Hydraulik mit Druck zu versorgen, und ein Generator befinden, sowie einen zweiten Abschnitt (6), wo sich der eigentliche Flüssigkeitstank befindet, der durch mehrere Trennwände (7) unterteilt ist und zwei Klappen (8) und (9) zum Ablassen des im Tank enthaltenen Wassers hat. Diese Klappen (8, 9) erstrecken sich über weite Teile der Körperunterseite und eines dritten Abschnitts (13), in dem sich der von der Hydraulik angetriebene Mechanismus zum Öffnen und Schließen der Klappen (8, 9) befindet. Diese drei Abschnitte sind aus einem Verbundwerkstoff gefertigt und bilden eine Kompaktbaugruppe, die mit Hilfe eines Stifts (33) an einem baryzentrischem Haken des Hubschraubers aufgehängt wird. Dieser Stift (33) befindet sich am oberen Teil des besagten Körpers und dieser obere Teil hat darüberhinaus zwei weitere Haken (36), die an entsprechenden Platten (37) anzubringen sind, die am unteren Teil des Hubschraubers befestigt sind. Die besagten Hakten (36) befinden sich an der vorderen Seite des besagten stromlinienförmigen Körpers, der zusätzlich über vier höhenverstellbare elastische Halter (38) verfügt. Zwei dieser Halter (38) befinden sich hinter den Haken (36) und vorne vor dem baryzentrischen Haken (34) und die anderen beiden hinter dem baryzentrischen Haken (34) am hinteren Teil des besagten stromlinienförmigen Tankkörpers.

2. Flüssigkeitstank wie in Anspruch 1, gekennzeichnet dadurch, daß die Haken, die an den Platten befestigt werden können, keilähnliche Köpfe (39) mit einer Oberseite haben, die eine gekrümmte Struktur hat und so in eine entspechend gekrümmte Aussparung am Sitz für den Hakenkopf an der entsprechenden Platte (40) paßt. Dabei befinden sich auf beiden Seiten des Sitzes entsprechende Seitenwände (41), so daß man den Haken nur in seinen Sitz einführen oder wieder herausnehmen kann, wenn man ihn 2 Grad neigt.

3. Flüssigkeitstank wie in Anspruch 1, gekennzeichnet dadurch, daß der Mechanismus zum Öffnen der Klappen aus einem hydraulischen Heber (14) besteht, der einen ersten Hebelarm (15) betätigt, in den ein Arretierstift (16) eingebaut ist, welcher ebenfalls in einen Stützarm (17) eingebaut ist, der, wenn die Klappen geschlossen sind, eine um 2 Grad nach außen abweichende Stellung hat. Dieser Stützarm hat an seinem freien Ende ein Lagerelement, das in einer Führung (18) gleitet, die sich am längsten Arm eines abgewinkelten Halters (19) befindet, der an der ersten Antriebswelle für die Klappen (10) angebracht ist, die den ganzen besagten zweiten Abschnitt kreuzt, während der kürzere Arm des abgewinkelten Halters mit einem Stab (20) integriert ist, der wiederum an seinem anderen Ende mit einem dritten Hebelarm (21) verbunden ist, der zu einer zweiten Klappenantriebswelle (11) gehört, die ihrerseits den ganzen zweiten Abschnitt des Tanks kreuzt, dessen Wellen die Klappen mit längenverstellbaren Stäben (23) betätigen.

4. Flüssigkeitstank wie im vorstehenden Anspruch, gekennzeichnet dadurch, daß in ihn noch ein Sicherheitsmechanismus für Notöffnungen der Klappen (8, 9) eingebaut ist, der sich aus einem Zylinder zusammensetzt, in dessen Innern sich eine CO₂-Flasche wie sie bei Luftgewehren verwendet wird befindet. Dieser Zylinder wird mit einer Schraubkappe (43) verschlossen, die einen hohlen Vorsprung (25) hat, die den Verschluß der Flasche durchbohren kann und die außen ein Verbindungsstück (26) hat, an das ein kleiner Schlauch (27) angepaßt wird. Dieser Schlauch wird an die Hydraulik angeschlossen, während der untere Teil der Flasche von einer Schiebevorrichtung (28) geschoben wird, die von einem Hebel (29) betätigt wird, der wiederum von einem Magnet (31) angetrieben wird.

## Revendications

1. Le réservoir de liquide doit être monté sur des hélicoptères, semblables à ceux habituellement utilisés pour lutter contre les incendies, caractérisé par un corps caréné (1) de forme généralement rectangulaire qui comprend une première section (2) qui abrite un moteur thermique qui actionne un compresseur destiné à pressuriser un circuit hydraulique, et un générateur, une deuxième section (6) qui comprend le réservoir de liquide à proprement parler qui comporte une série de divisions (7) et qui a deux portes (8) et (9) pour décharger l'eau contenue dans le réservoir, portes (8,9) qui couvrent une partie substantielle du côté inférieur du corps et une troisième section (13) qui contient un mécanisme mû par le circuit hydraulique pour l'ouverture et la fermeture des portes (8, 9), ces trois sections étant faites dans un matériau composite et constituant un ensemble compact suspendu à un crochet barycentral de l'hélicoptère par une cheville (33) située sur la partie supérieure du corps cité, partie supérieure qui comprend deux autres crochets (36) à fixer à leurs plateaux respectifs (37) reliés à la partie inférieure de l'hélicoptère, ces crochets (36) étant placés sur la partie frontale du corps caréné cité, qui est en outre doté de quatre supports élastiques (38) réglables en hauteur : deux d'entre eux étant placés derrière les crochets (36) et devant le crochet barycentral (34) et les deux autres étant placés en regard du crochet barycental (34) sur la partie arrière du corps caréné du réservoir cité.

2. Le réservoir de liquide, conforme à la demande 1, est caractérisé par le fait que les crochets qui peuvent être fixés aux plateaux ont un coin en forme de tête (39) dont la face supérieure a une structure courbe qui s'accouple au logement courbe correspondant situé sur un support destiné à la tête du crochet du plateau correspondant (40), avec, de chaque côté du support correspondant, des parois latérales (41) qui impliquent qu'on ne puisse introduire ou extraire le crochet de son support qu'en l'inclinant de 2 degrés.

3. Le réservoir de liquide, conforme à la demande 1, est caractérisé par le fait que le mécanisme d'ouverture des portes est constitué par un jack hydraulique (14) qui agit sur un premier bras de levier (15) solidaire d'une cheville de fermeture (16) qui est également solidaire d'un bras de renfort (17) qui adopte une position déviée de 2 degrés vers l'extérieur lorsque les portes sont fermées, avec, à son extrémité libre, un élément de butée qui suit une glissière (18) située sur le bras le plus long d'un support angulaire (19) fixé sur un premier arbre de transmission pour les portes (10) qui traverse toute la deuxième section citée, alors que le bras le plus court du support angulaire est solidaire d'une tige (20) reliée par l'autre extrémité à un troisième bras de levier (21) correspondant à un deuxième arbre (11) qui actionne les portes, qui traverse à son tour la deuxième section du réservoir, arbres qui agissent sur les portes au moyen de tiges réglables en longueur (23).

4. Le réservoir de liquide, conforme à la demande précédente, est caractérisé par le fait qu'il comprend en outre un mécanisme de sécurité et de secours destiné à ouvrir les portes (8, 9) constitué par un cylindre contenant une bouteille de CO₂ identique à celle utilisée pour les fusils à air comprimé, cylindre qui est fermé par un chapeau fileté (43) qui présente une protubérance creuse (25) capable de perforer l'obturateur de la bouteille et un logement (26) extérieur auquel s'adapte un petit tuyau (27), ce tuyau étant relié au circuit hydraulique, alors que la partie inférieure de la bouteille reçoit la pulsion d'un poussoir (28) mû par un levier (29) lui-même actionné par un aimant (31).
